(19) Europäisches Patentamt
European Patent Office
Office européen des brevets

(11) Veröffentlichungsnummer : **0 438 712 B1**

# (12) EUROPÄISCHE PATENTSCHRIFT

(45) Veröffentlichungstag der Patentschrift : **08.09.93 Patentblatt 93/36**

(51) Int. Cl.$^5$ : **A01N 47/44,** // (A01N47/44, 43:653)

(21) Anmeldenummer : **90124098.6**

(22) Anmeldetag : **13.12.90**

## (54) Fungizide Wirkstoffkombinationen.

(30) Priorität : **17.01.90 DE 4001115**

(43) Veröffentlichungstag der Anmeldung : **31.07.91 Patentblatt 91/31**

(45) Bekanntmachung des Hinweises auf die Patenterteilung : **08.09.93 Patentblatt 93/36**

(84) Benannte Vertragsstaaten : **BE CH DE DK ES FR GB IT LI LU NL SE**

(56) Entgegenhaltungen :
**EP-A- 0 040 345**
**EP-A- 0 266 048**
**FR-A- 2 328 399**

(73) Patentinhaber : **BAYER AG**
**D-51368 Leverkusen (DE)**

(72) Erfinder : **Dutzmann, Stefan, Dr.**
**Kosenberg 10**
**W-4010 Hilden 1 (DE)**
Erfinder : **Brandes, Wilhelm, Dr.**
**Eichendorffstrasse 3**
**W-5653 Leichlingen 1 (DE)**
Erfinder : **Berg, Dieter, Dr.**
**Gellertweg 27**
**W-5600 Wuppertal 1 (DE)**
Erfinder : **Holmwood, Graham, Dr.**
**Krutscheider Weg 105**
**W-5600 Wuppertal 11 (DE)**

EP 0 438 712 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Anmeldung betrifft neue Wirkstoffkombinationen, die aus dem bekannten 1-(4-Chlorphenyl)-4,4-dimethyl-3-(1,2,4-triazol-1-yl-methyl)-pentan-3-ol einerseits und ebenfalls bekannten guanidierten aliphatischen Polyaminen andererseits bestehen und sehr gut zur Bekämpfung von Pilzen geeignet sind.

Es ist bereits bekannt geworden, daß 1-(4-Chlorphenyl)-4,4-dimethyl-3-(1,2,4-triazol-1-yl-methyl)-pentan-3-ol fungizide Potenz besitzt (vgl. EP-A 0 040 345). Die Wirksamkeit dieses Stoffes ist gut; sie läßt jedoch bei niedrigen Aufwandmengen in manchen Fällen zu wünschen übrig.

Ferner ist schon bekannt, daß guanidierte aliphatische Polyamine fungizide Eigenschaften aufweisen. So kann z.B. das Produkt mit dem Common Name "Guazatine" zur Bekämpfung von Pilzen eingesetzt werden kann (vgl. K.H. Büchel "Pflanzenschutz und Schädlingsbekämpfung", Seite 149, Georg Thieme Verlag, Stuttgart, 1977). Die Wirkung dieses Stoffes ist aber bei niedrigen Aufwandmengen ebenfalls nicht immer befriedigend.

Es wurde nun gefunden, daß die neuen Wirkstoffkombinationen aus

A) 1-(4-Chlorphenyl)-4,4-dimethyl-3-(1,2,4-triazol-1-yl-methyl)-pentan-3-ol der Formel

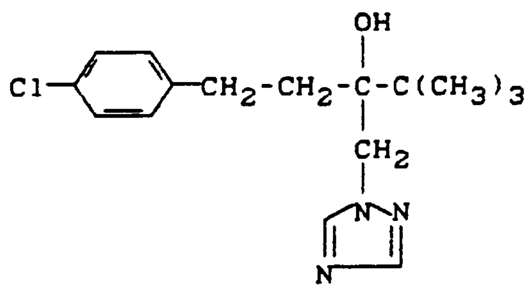

(I)

und

B) mindestens einem guanidierten aliphatischen Polyamin der Formel

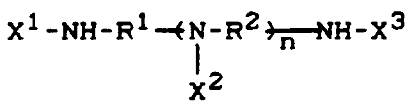

(II)

in welcher

$R^1$ für einen verzweigten oder unverzweigten, divalenten aliphatischen Kohlenwasserstoffrest mit 3 bis 14 Kohlenstoffatomen steht,

$R^2$ für einen verzweigten oder unverzweigten, divalenten aliphatischen Kohlenwasserstoffrest mit 3 bis 14 Kohlenstoffatomen steht,

$X^1$, $X^2$ und $X^3$ unabhängig voneinander für Wasserstoff oder den Rest der Formel

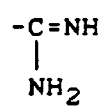

stehen

und

n für ganze Zahlen von 0 bis 16 steht, wobei die für

$R^2$ stehenden divalenten aliphatischen Kohlenwasserstoffreste voneinander verschieden sein können, wenn n für Zahlen steht, die größer als 1 sind,

und/oder deren Säureadditions-Salzen sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer echter synergistischer Effekt vor und nicht nur eine Wirkungsergänzung.

Das in den erfindungsgemäßen Wirkstoffkombinationen enthaltene 1-(4-Chlorphenyl)-4,4-dimethyl-3-(1,2,4-triazol-1-yl-methyl)-pentan-3-ol der Formel (I) ist bereits bekannt (vgl. EP-A 0 040 345).

Die in den erfindungsgemäßen Wirkstoffkombinationen weiterhin enthaltenen guanidierten aliphatischen Polyamine sind durch die Formel (II) allgemein definiert. Bevorzugt sind Verbindungen der Formel (II), in denen

$R^1$ für eine unverzweigte Alkylenkette mit 8 bis 14 Kohlenstoffatomen steht,

$R^2$ für eine unverzweigte Alkylenkette mit 8 bis 14 Kohlenstoffatomen steht,

$X^1$, $X^2$ und $X^3$ unabhängig voneinander für Wasserstoff oder den Rest der Formel

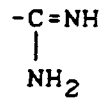

stehen und

n für ganze Zahlen von 0 bis 5 steht, wobei die für $R^2$ stehenden Alkylenketten voneinander verschieden sein können, wenn n für Zahlen steht, die größer als 1 sind.

Bevorzugt sind auch Additionsprodukte aus Säuren und denjenigen guanidierten aliphatischen Polyaminen der Formel (II), in denen $R^1$, $R^2$, $X^1$, $X^2$, $X^3$ und n die vorzugsweise genannten Bedeutungen haben. Zu den Säuren, die addiert werden können, gehören vorzugsweise Halogenwasserstoffsäuren, wie Chlorwasserstoffsäure und Bromwasserstoffsäure, insbesondere Chlorwasserstoffsäure, ferner Phosphorsäure, Salpetersäure, Schwefelsäure, Kohlensäure, mono- und bifunktionelle Carbonsäuren und Hydroxycarbonsäuren, wie Ameisensäure, Essigsäure, Maleinsäure, Bernsteinsäure, Fumarsäure, Oxalsäure, Weinsäure, Zitronensäure, Salicylsäure, Sorbinsäure und Milchsäure, und außerdem Arylsulfonsäuren und Alkylarylsulfonsäuren mit 1 bis 25 Kohlenstoffatomen, vorzugsweise 1 bis 20 Kohlenstoffatomen im Alkylteil, wobei p-Toluolsulfonsäure und 4-(n-Dodecyl)-benzolsulfonsäure speziell genannt seien.

Besonders bevorzugt verwendbare guanidierte aliphatische Polyamine der Formel (II) sind die unter den Common Names "Guazatine" und "Iminoctadine" bekannten Fungizide sowie deren Additions-Salze mit Essigsäure oder 4-(n-Dodecyl)-benzolsulfonsäure.

Bei dem Fungizid mit dem Common Name "Guazatine" handelt es sich um ein Produkt, das bei der Reaktion von Polyaminen, insbesondere von Octamethylendiamin, Imino-di-(octamethylen)-diamin und Octamethylen-bis-(imino-octamethylen)-diamin, mit Cyanamid entsteht und in Form von Acetat-Salzen vorliegt. Die chemische Zusammensetzung dieses Produktes kann durch die folgende Formel wiedergegeben werden:

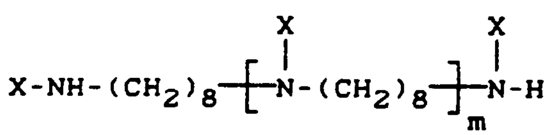 (II-1)

$$x\ (2 + m)\ CH_3COOH$$

worin

m für ganze Zahlen von 0 bis 5 steht und

X für Wasserstoff (17 bis 23 %) oder den Rest der Formel

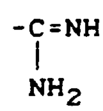

(77 bis 83 %) steht.

Angaben zur Zusammensetzung von Guazatine finden sich auch in Farm Chemicals Handbook 1989, C 151.

Bei dem Fungizid mit dem Common Name "Iminoctadine" handelt es sich um ein Produkt, das bei der Reaktion von Imino-bis-(8-amino-octyl) der Formel

$$H_2N\text{-}(CH_2)_8\text{-}NH\text{-}(CH_2)_8\text{-}NH_2$$

mit O-Alkyl-isoharnstoff entsteht.

Die erfindungsgemäßen Wirkstoffkombinationen können eine oder mehrere Verbindungen der Formel (II) und/oder deren Säureadditions-Salze enthalten. Wenn Mischungen von Verbindungen der Formel (II) eingesetzt werden, dann kommen vorzugsweise solche Gemische in Frage, in denen mindestens 70 % der Reste $X^1$, $X^2$ und $X^3$ für eine Gruppe der Formel

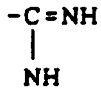

stehen.

Die guanidierten aliphatischen Polyamine der Formel (II) und deren Säureadditions-Salze sind bereits bekannt (vgl. GB-PS 1 114 155,GB-PS 1 570 517, EP-OS 0 155 509, JP-OS 55-139 346 und K.H. Büchel "Pflanzenschutz und Schädlingsbekämpfung", Seite 149, Georg Thieme Verlag, Stuttgart 1977).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,2 bis 20 Gewichtsteile, vorzugsweise 0,5 bis 10 Gewichtsteile an guanidierten aliphatischen Polyaminen der Formel (II).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Botrytis-Arten im Weinbau, bei Beerenobst und im Gemüsebau sowie zur Bekämpfung von Getreidekrankheiten, wie Fusarium.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/ oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffen, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigt die Kombination eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Beispiel 1

Fusarium nivale-Test (Roggen) / Saatgutbehandlung

Die Anwendung der Wirkstoffe erfolgt als Trockenbeizmittel. Sie werden zubereitet durch Abstrecken des jeweiligen Wirkstoffes bzw. der Wirkstoffkombination mit Gesteinsmehl zu einer feinpulvrigen Mischung, die eine gleichmäßige Verteilung auf der Saatgutoberfläche gewährleistet.

Zur Beizung schüttelt man das infizierte Saatgut 3 Minuten lang mit dem Beizmittel in einer verschlossenen Glasflasche.

Den Roggen sät man mit 2 x 100 Korn 1 cm tief in eine Standarderde und kultiviert ihn im Gewächshaus bei einer Temperatur von ca. 10°C und einer relativen Luftfeuchtigkeit von ca. 95 % in Saatkästen, die täglich 15 Stunden dem Licht ausgesetzt werden.

3 Wochen nach der Aussaat erfolgt die Auswertung der Pflanzen auf Symptome des Schneeschimmels.

Wirkstoffe, Wirkstoffkonzentrationen und Versuchsergebnisse gehen aus der folgenden Tabelle hervor.

Tabelle 1

Fusarium nivale-Test (Roggen) / Saatgutbehandlung

| Wirkstoff | Wirkstoffaufwandmenge in mg/kg Saatgut | Wirkungsgrad in % der unbehandelten Kontrolle |
|---|---|---|
| unbehandelt | - | 0 |
| **bekannt:** | | |
| 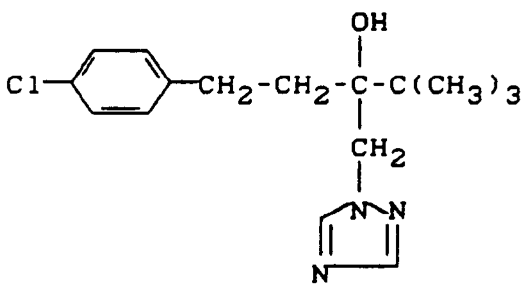 (I) | 80 | 24 |
| | 10 | 33 |
| (II-1) Guazatine | 80 | 93 |
| | 10 | 29 |
| **erfindungsgemäß:** | | |
| (I) + (II-1) Guazatine (1:7) | 10 + 70 | 100 |
| (I) + (II-1) Guazatine (1:1) | 5 + 5 | 60 |

## Patentansprüche

1. Fungizide Mittel, gekennzeichnet durch einen Gehalt an einer Wirkstoffkombination bestehend aus
   A) 1-(4-Chlorphenyl)-4,4-dimethyl-3-(1,2,4-triazol-1-yl-methyl)-pentan-3-ol der Formel

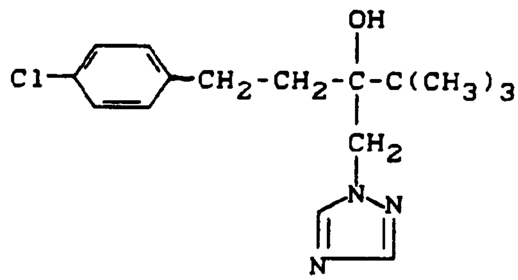 (I)

und

B) mindestens einem guanidierten aliphatischen Polyamin der Formel

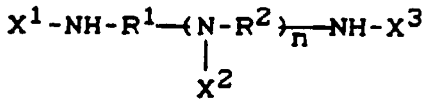 (II)

in welcher

| | |
|---|---|
| $R^1$ | für einen verzweigten oder unverzweigten, divalenten aliphatischen Kohlenwasserstoffrest mit 3 bis 14 Kohlenstoffatomen steht, |
| $R^2$ | für einen verzweigten oder unverzweigten, divalenten aliphatischen Kohlenwasserstoffrest mit 3 bis 14 Kohlenstoffatomen steht, |
| $X^1$, $X^2$ und $X^3$ | unabhängig voneinander für Wasserstoff oder den Rest der Formel |

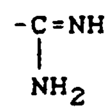

| | |
|---|---|
| | stehen und |
| n | für ganze Zahlen von 0 bis 16 steht, wobei die für |
| $R^2$ | stehenden divalenten aliphatischen Kohlenwasserstoffreste voneinander verschieden sein können, wenn n für Zahlen steht, die größer als 1 sind, |

und/oder deren Säureadditions-Salzen.

2. Mittel gemäß Anspruch 1, dadurch gekennzeichnet, daß in den Wirkstoffkombinationen das Gewichtsverhältnis von Wirkstoff der Formel (I) zu guanidiertem aliphatischen Polyamin der Formel (II) zwischen 1:0,2 und 1:20 liegt.

3. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von Pilzen.

5. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

6. Fungizide Mittel gemäß Anspruch 1, dadurch gekennzeichnet, daß sie als guanidiertes aliphatisches Polyamin ein Produkt der Formel

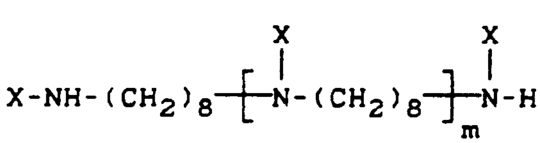 (II-1)

$x\ (2 + m)\ CH_3COOH$

worin

m für ganze Zahlen von 0 bis 5 steht und

X für Wasserstoff (17 bis 23 %) oder den Rest der Formel

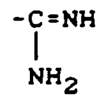

(77 bis 83 %) steht,

enthalten.

## Claims

1. Fungicidal agents, characterised in that they contain a combination of active compounds, consisting of
   A) 1-(4-chlorophenyl)-4,4-dimethyl-3-(1,2,4-triazol-1-yl-methyl)-pentan-3-ol, of the formula

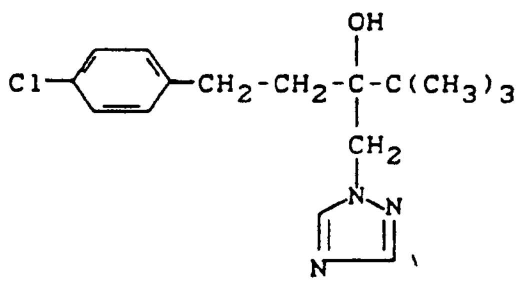

(I),

and

b) at least one guanidated aliphatic polyamine of the formula

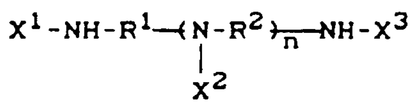

(II)

in which

| | |
|---|---|
| $R^1$ | represents a branched or unbranched divalent aliphatic hydrocarbon radical having 3 to 14 carbon atoms, |
| $R^2$ | represents a branched or unbranched divalent aliphatic hydrocarbon radical having 3 to 14 carbon atoms, |
| $X^1$, $X^2$ and $X^3$ | independently of one another represent hydrogen or the radical of the formula |

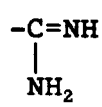

and

| | |
|---|---|
| n | represents integers from 0 to 16, it being possible for the divalent aliphatic hydrocarbon radicals which represent $R^2$ to differ from each other if n represents numbers greater than 1, |

and/or their acid addition salts.

2. Agents according to Claim 1, characterised in that, in the combinations of active compounds, the ratio by weight of active compound of the formula (I) to guanidated aliphatic polyamine of the formula (II) is between 1:0.2 and 1:20.

3. Method of combating fungi, characterised in that combinations of active compounds according to Claim 1 are allowed to act on the fungi and/their environment.

4. Use of combinations of active compounds according to Claim 1 for combating fungi.

5. Process for the preparation of fungicidal agents, characterised in that combinations of active compounds according to Claim 1 are mixed with extenders and/or surface-active substances.

6. Fungicidal agents according to Claim 1, characterised in that they contain, as guanidated aliphatic polyamine, a product of the formula

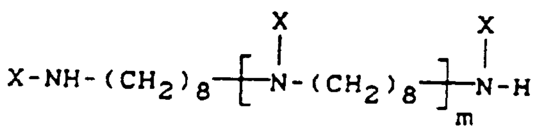

(II-1)

$x\ (2 + m)\ CH_3COOH$

in which

m represents integers from 0 to 5

and

X represents hydrogen (17 to 23%) or the radical of the formula

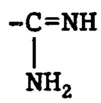

(77 to 83%).

## Revendications

1. Produits fongicides caractérisés en ce qu'ils contiennent une combinaison de substances actives consistant en

A) le 1-(4-chlorophényl)-4,4-diméthyl-3-(1,2,4-triazole-1-yl-méthyl)-pentane-3-ol de formule

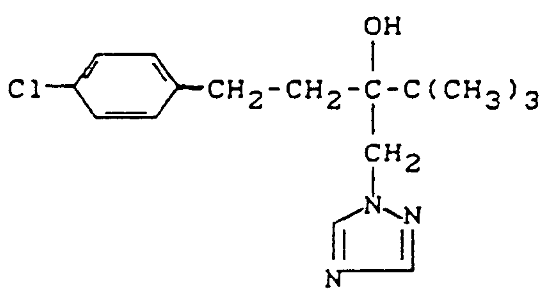

(I)

et

B) au moins une polyamine aliphatique guanidée de formule

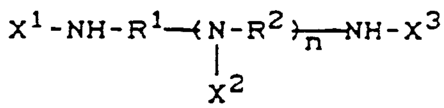

(II)

dans laquelle

$R^1$ représente un radical hydrocarboné aliphatique divalent à chaîne droite ou ramifiée en $C_3$-$C_{14}$,

$R^2$ représente un radical hydrocarboné aliphatique divalent à chaîne droite ou ramifiée en $C_3$-$C_{14}$,

$X^1$, $X^2$ et $X^3$ représentent chacun, indépendamment les uns des autres, l'hydrogène ou le groupe de formule

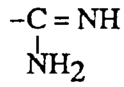

et

n est un nombre entier allant de 0 à 16,

les radicaux hydrocarbonés aliphatiques divalents représentés par $R^2$ pouvant être différents lorsque n est supérieur à 1,

et/ou leurs sels formés par addition avec des acides.

2. Produit selon revendication 1, caractérisé en ce que, dans les combinaisons de substances actives, les proportions relatives en poids entre la substance active de formule I et la polyamine aliphatique guanidée de formule II vont de 1 : 0,2 à 1 : 20.

3. Procédé pour combattre les mycètes, caractérisé en ce qu l'on fait agir sur les mycètes et/ou leur habitat des combinaisons de substances actives selon la revendication 1.

4. Utilisation des combinaisons de substances actives selon la revendication 1 pour la lutte contre les mycètes.

5. Procédé de préparation de produits fongicides, caractérisé en ce que l'on mélange des combinaisons de substances actives selon la revendication 1 avec des diluants et/ou des substances tensioactives.

6. Produits fongicides selon la revendication 1, caractérisés en ce qu'ils contiennent en tant que polyamine aliphatique guanidée un produit de formule

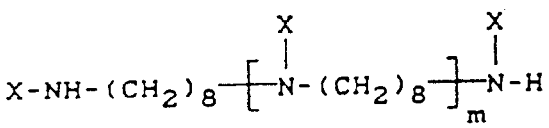 (II-1)

$x\ (2 + m)\ CH_3COOH$

dans laquelle

m est un nombre entier allant de 0 à 5 et

X représente l'hydrogène (17 à 23 %) ou le groupe de formule

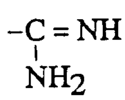 (77 à 83 %).